# EUROPÄISCHE PATENTSCHRIFT

(11) **EP 1 724 423 B1**
(45) Veröffentlichungstag und Bekanntmachung des Hinweises auf die Patenterteilung: **14.07.2010**
(21) Anmeldenummer: 06004674.5
(22) Anmeldetag: 08.03.2006
(51) Int. Cl.: E05B 65/32, E05B 15/00, B60R 21/13, B60N 2/48, B60R 19/00, B60R 21/055, B62D 1/19

(54) **Kraftfahrzeugschloß und Haltevorrichtung für eine Fahrzeugsicherheitseinrichtung**
Motor vehicle lock and retaining device for vehicle security device
Serrure de véhicule automobile et dispositif de retenue pour un dispositif de sécurité d'un véhicule

(30) Priorität: 16.03.2005 DE 202005004390 U
(43) Veröffentlichungstag der Anmeldung: 22.11.2006
(73) Patentinhaber: Brose Schliesssysteme GmbH & Co. KG, 42369 Wuppertal (DE)
(72) Erfinder: Kachouh, Checrallah, 44227 Dortmund (DE)
(74) Vertreter: Gesthuysen, von Rohr & Eggert

(56) Entgegenhaltungen:
- EP-A- 1 512 815
- WO-A-2005/012677
- DE-A1- 10 312 304
- DE-A1- 19 830 407

## Beschreibung

Die Erfindung betrifft ein Kraftfahrzeugschloß mit den Merkmalen des Oberbegriffs von Anspruch 1 sowie eine Haltevorrichtung für eine Fahrzeugsicherheitseinrichtung gemäß Anspruch 9.

Das in Rede stehende Kraftfahrzeugschloß umfaßt vorliegend alle Arten von Seitentürschlössem, Hecktürschlössern, Heckklappenschlössern etc.. Heutige Kraftfahrzeugschlösser sind üblicherweise mit einer Schloßfalle und mit einer Sperrklinke ausgestattet, um eine haltende Verbindung mit einem an der Kraftfahrzeugkarosserie angeordneten Schließkloben o. dgl. zu realisieren (EP 0 589 158 A1). Die Schloßfalle wird in den folgenden Ausführungen ganz allgemein als "Falle" bezeichnet. Die Falle ist um eine Schwenkachse schwenkbar und jedenfalls in eine Hauptschließstellung bringbar. Die Sperrklinke hält die Falle in der Hauptschließstellung, indem sie mit einer Rastnase o. dgl. in eine entsprechende Ausformung - Hauptrast - an der Falle eingreift. Dieses Grundkonzept findet auch bei Kraftfahrzeugschlössern mit einem motorischen Öffnungsantrieb Anwendung, wie ebenfalls in der EP 0 589 158 A1 gezeigt ist.

Die Falle ist regelmäßig in einen von der Offenstellung aus gesehen jenseits der Hauptschließstellung gelegenen Überhub bringbar. Als "Überhub" wird vorliegend der gesamte, entsprechend jenseits der Hauptschließstellung gelegene Schwenkbereich der Falle verstanden. Dem Überhub kommen bei dem obigen Kraftfahrzeugschloß verschiedene Bedeutungen zu. Beim Zuschlagen der dem Kraftfahrzeugschloß zugeordneten Kraftfahrzeugtür bildet der Überhub gewissennaßen den Auslaufbereich der Falle. Die Falle läuft bei einem derartigen Schließvorgang beim Erreichen der Hauptschließstellung nicht vor Block, sondern erreicht zunächst den Überhub und fällt anschließend zurück in die Hauptschließstellung. Die erforderliche Bremsung der Kraftfahrzeugtür beim Schließvorgang wird dann in der Regel durch die an der Kraftfahrzeugtür angeordnete Türdichtung, die beim Schließvorgang einen Dichtungsgegendruck aufbaut, bewirkt.

Bei einer mit einer Hauptrast ausgestatteten Falle ist die Verstellung der Falle beim Schließvorgang in den Überhub ferner notwendig, um das Einfallen der Sperrklinke zunächst unbehindert von der Hauptrast zu ermöglichen.

Das oben beschriebene Kraftfahrzeugschloß mit Falle und Sperrklinke ist zwar zuverlässig, je nach Ausgestaltung von Falle und Sperrklinke ist das Ausheben der Sperrklinke und damit das Freigeben der Falle allerdings mit einer vergleichsweisen hohen Aushebekraft verbunden, die im wesentlichen durch die Reibkraft zwischen der Falle und der Sperrklinke während des Aushebens der Sperrklinke bestimmt wird. Vor diesem Hintergrund ist ein ggf. vorgesehener Öffnungsantrieb vergleichsweise leistungsstark auszulegen, was zu hohen Kosten und zu einem hohen Bauraumbedarf führt.

Einen Ansatz zur Reduzierung der für die Freigabe der Falle aus der Hauptschließstellung erforderlichen Kraft zeigt die DE 103 12 304 A1, von der die Erfindung ausgeht. Hier ist eine Sperrklinkenanordnung mit einer Sperrklinkenkinematik und einem verstellbaren Blockierelement vorgesehen, wobei die Falle mit der Sperrklinkenkinematik im wesentlichen bewegungsgekoppelt ist und wobei die Sperrklinkenanordnung - und damit die Falle - durch das Blockierelement blockierbar ist. Das Blockierelement der Sperrklinkenanordnung korrespondiert von seiner Funktion her mit der üblicherweise bei Kraftfahrzeugschlössern eingesetzten Sperrklinke.

Die Sperrklinkenkinematik ist gewissermaßen als Getriebe zwischen die Falle und das Blockierelement geschaltet. Je nach Auslegung der Sperrklinkenkinematik läßt sich die vom Blockierelement für die Blockierung der Falle aufzubringende Blockierkraft beliebig reduzieren, was die Leistungsanforderungen an einen Öffnungsantrieb reduziert. Die Sperrklinkenkinematik bildet ein Untersetzungsgetriebe, das jedenfalls bei in der Hauptschließstellung befindlicher Falle eine besonders hohe Untersetzung bereitstellt.

Die obige, hohe Untersetzung führt zwar zu einer geringen Blockierkraft. Die hohe Untersetzung führt aber auch dazu, daß bereits eine geringe Auslenkung der Falle aus der Hauptschließstellung heraus mit vergleichsweise großen Auslenkungen in der Sperrklinkenkinematik verbunden ist. Dies ist vor dem Hintergrund des mit hoher Energie verbundenen Zuschlagens einer Kraftfahrzeugtür nicht gewünscht, um hohe Beschleunigungen in der Sperrklinkenkinematik insbesondere beim Erreichen des Überhubs zu vermeiden. Daher ist bei dem bekannten Kraftfahrzeugschloß ein Freilauf vorgesehen, der im Zuge der Verstellung der Falle von der Hauptschließstellung in den Überhub durchlaufen wird, wobei beim Durchlaufen des Freilaufs die Falle weitgehend entkoppelt von der Sperrklinkenkinematik ist. Der Freilauf ist mit einer Vorspannung versehen, die beim Durchlaufen des Freilaufs zu überwinden ist.

Bei dem bekannten Kraftfahrzeugschloß ist der Freilauf durch ein in der Falle angeordnetes Langloch realisiert, in dem ein Bolzen der Sperrklinkenkinematik läuft. Der Bolzen ist gegen die Falle über eine Schraubenfeder vorgespannt. Nachteilig bei dieser Realisierung des Freilaufs ist zunächst die Tatsache, daß ein in einem Langloch laufender Bolzen grundsätzlich mit einem hohen Verschleiß verbunden ist. Ferner läßt sich die ebenfalls ungewünschte Reibung zwischen dem Bolzen und den Seitenwänden des Langlochs kaum reduzieren. Weiter ist die konstruktive Auslegung des Freilaufs nur in engen Grenzen möglich. Auch die Auslegung der Vorspannung durch die Schraubenfeder kann zu Problemen führen. Insgesamt ist die Realisierung des Freilaufs hier im Hinblick auf die konstruktiven Randbedingungen sowie im Hinblick auf den grundsätzlich ungewünschten Verschleiß nachteilig.

Hinsichtlich der ebenfalls in Rede stehenden Haltevorrichtung für eine Fahrzeugsicherheitseinrichtung darf auf die DE 198 21 594 A1 verwiesen werden. Eine Fahrzeugsicherheitseinrichtung dient dazu, bei einem Unfall eine Verletzung von Fahrzeuginsassen zu verhindern oder jedenfalls das Gefährdungspotential eines Unfalls zu begrenzen. Die Fahrzeugsicherheitseinrichtung kann beispielsweise ausgestaltet sein als verlagerbarer Überrollbügel, als verlagerbare Kopfstütze, verlagerbares Kniepolster, als verlagerbare Motorhaube, als verlagerbarer Stoßfänger, als verlagerbarers Lenkrad o. dgl.. Die Fahrzeugsicherheitseinrichtung wird bei einem Unfall mechanisch in eine schützende Position verlagert. Dazu wird ein entsprechendes Bauteil der Fahrzeugsicherheitseinrichtung aus einer Ruhestellung vorzugsweise schlagartig in eine Wirkungsstellung verlagert. Die dafür erforderliche Energie wird vorzugsweise durch Federelemente, die mechanisch oder pneumatisch ausgestaltet sein können, zur Verfügung gestellt. Die Haltevorrichtung dient hier der Fixierung des Bauteils in der Ruhestellung. Die Anforderungen an eine solche Haltevorrichtung entsprechen in den wesentlichen Punkten den Anforderungen an das oben beschriebene Kraftfahrzeugschloß. Auf die obigen Ausführungen darf insoweit verwiesen werden.

Der Erfindung liegt das Problem zugrunde, das bekannte Kraftfahrzeugschloß bzw. die Haltevorrichtung derart auszugestalten und weiterzubilden, daß die Reduzierung konstruktiver Beschränkungen bei gleichzeitiger Erhöhung der Verschleißfestigkeit gewährleistet ist.

Das obige Problem wird bei einem Kraftfahrzeugschloß mit den Merkmalen des Oberbegriffs von Anspruch 1 durch die Merkmale des kennzeichnenden Teils von Anspruch 1 gelöst.

Wesentlich ist die Erkenntnis, daß sich der Freilauf im Hinblick auf den Überhub der Falle durch einen um eine Schwenkachse schwenkbaren Freilaufhebel realisieren läßt. Das Durchlaufen des Freilaufs ist damit mit einem Verschwenken des Freilaufhebels gegen seine Vorspannung verbunden. Durch eine geeignete Lagerung des Freilaufhebels läßt sich die beim Durchlaufen des Freilaufs entstehende Reibung mit geringem konstruktivem Aufwand minimieren. Ferner läßt sich die mechanische Charakteristik des Freilaufs ohne weiteres durch die Form des Freilaufhebels sowie durch eine geeignete Auslegung der Vorspannung realisieren. Die Vorspannung kann dabei mit geringem konstruktivem Aufwand durch eine Schenkelfeder o. dgl. realisiert werden.

Es gibt eine Vielzahl von Möglichkeiten, die genannte Lehre der Erfindung auszugestalten und weiterzubilden. Dazu darf auf die Unteransprüche verwiesen werden.

Nach einer weiteren Lehre, der eigenständige Bedeutung zukommt, wird eine Haltevorrichtung für eine Fahrzeugsicherheitseinrichtung beansprucht.

Das Bauteil der Fahrzeugsicherheitseinrichtung weist hier ein Halteelement auf, mit dem eine Falle der Haltevorrichtung in Eingriff bringbar ist. Es ist ferner eine Sperrklinkenanordnung vorgesehen, die die Falle in einer Hauptschließstellung hält. Der grundlegende Aufbau der obigen Haltevorrichtung ist damit identisch zu dem grundlegenden Aufbau des oben angesprochenen Kraftfahrzeugschlosses, wobei das Halteelement des Bauteils bei der Haltevorrichtung dem Schließkloben an der Kraftfahrzeugkarosserie beim Kraftfahrzeugschloß entspricht. Alle Ausführungen zum Kraftfahrzeugschloß gelten daher in vollem Umfang entsprechend für die beanspruchte Haltevorrichtung.

Im folgenden wird die Erfindung anhand einer lediglich Ausführungsbeispiele darstellenden Zeichnung näher erläutert. In der Zeichnung zeigt
- Fig. 1: ein erfindungsgemäßes Kraftfahrzeugschloß mit einer Falle und ei- ner Sperrklinkenanordnung in der Offenstellung,
- Fig. 2: das Kraftfahrzeugschloß gemäß Fig. 1 in der Hauptschließstellung,
- Fig. 3: das Kraftfahrzeugschloß gemäß Fig. 1 im Überhub,
- Fig. 4: eine erfindungsgemäße Haltevorrichtung für eine Fahrzeugsicher- heitseinrichtung,
- Fig. 5: ein erfindungsgemäßes Kraftfahrzeugschloß mit einer Falle und ei- ner Sperrklinkenanordnung nach einer weiteren Ausführungsform in der Hauptschließstellung.

In der Zeichnung sind nur die für den erfindungsgemäßen Erfolg maßgeblichen Komponenten eines Kraftfahrzeugschlosses bzw. einer Haltevorrichtung dargestellt. Es versteht sich, daß auch alle weiteren für die jeweilige Funktion notwendigen Komponenten vorgesehen sind.

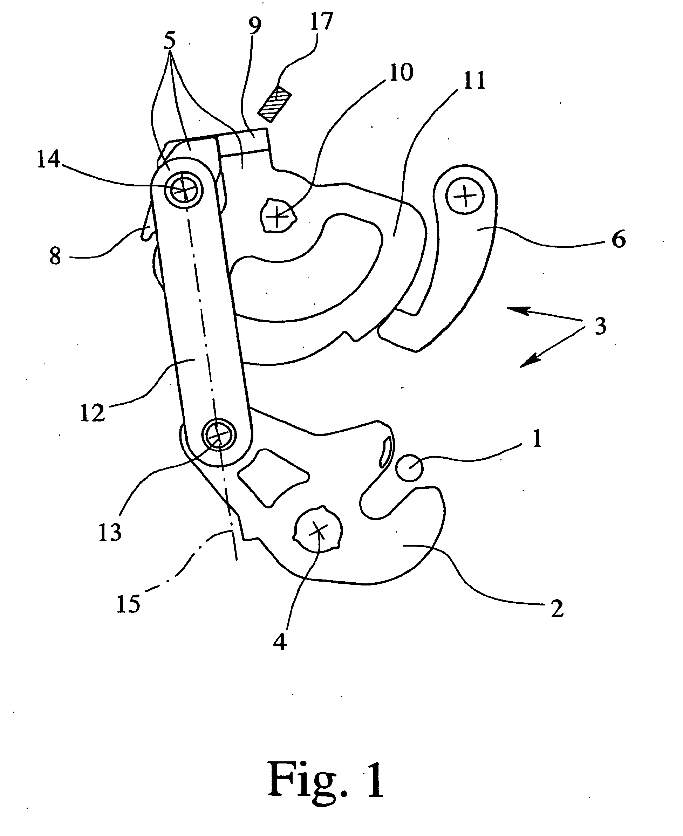

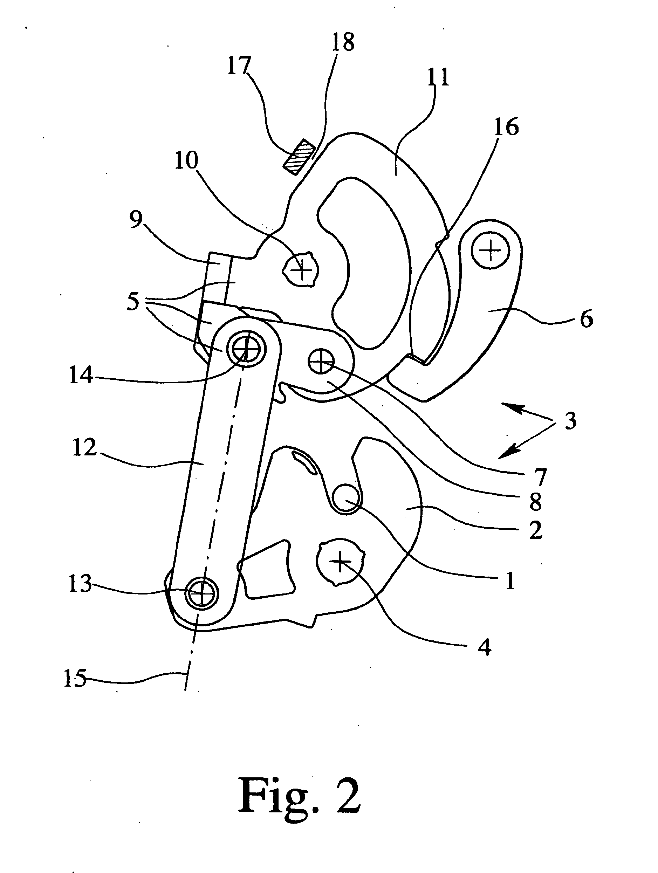

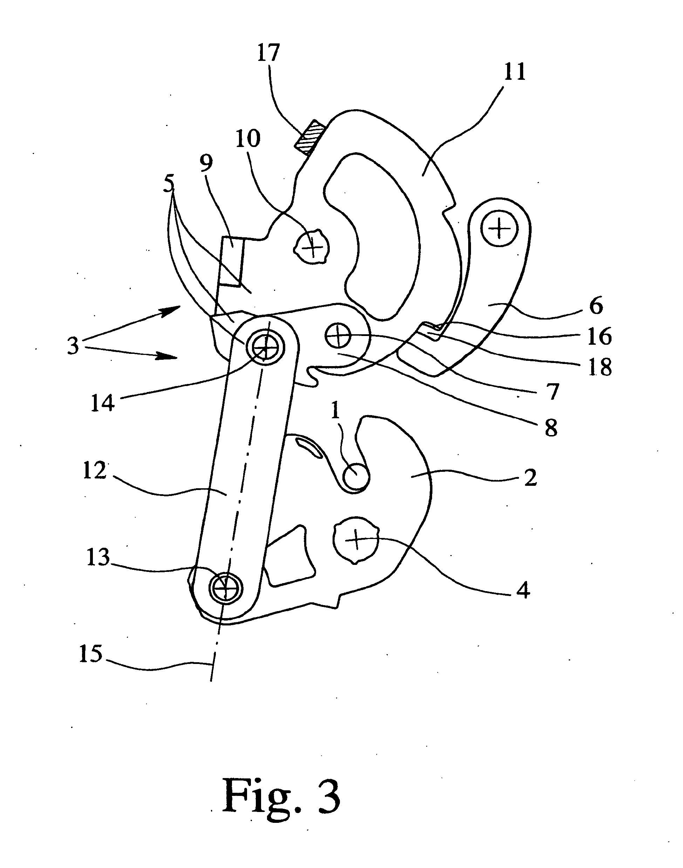

Die Fig. 1 bis 3 zeigen ausschnittsweise ein Kraftfahrzeugschloß mit einer einen Schließkloben 1 haltenden Falle 2 und einer Sperrklinkenanordnung 3. Die Falle 2 ist um eine Schwenkachse 4 in einer Schließrichtung und in einer Öffnungsrichtung verschwenkbar und läßt sich in die in Fig. 1 dargestellte Offenstellung sowie in die in Fig. 2 dargestellte Hauptschließstellung bringen. Bei Seitentürschlössern ist es vorzugsweise vorgesehen, daß die Falle 2 zusätzlich in eine nicht dargestellte Vorschließstellung bringbar ist. Die Falle 2 ist ferner in einen von der Offenstellung aus gesehen jenseits der Hauptschließstellung gelegenen Überhub bringbar (Fig. 3).

Die Sperrklinkenanordnung 3 ist in eine in Fig. 2 dargestellte Haltestellung sowie in eine in Fig. 1 dargestellte Freigabestellung bringbar. Die in der Haltestellung befindliche Sperrklinkenanordnung 3 hält die Falle 2 in der Hauptschließstellung und, soweit vorgesehen, in der Vorschließstellung. Dabei kann es sein, daß die Sperrklinkenanordnung 3 zum Halten der Falle 2 in der Vorschließstellung in eine zweite Haltestellung bringbar ist. Es kann aber auch sein, daß nur eine einzige Haltestellung vorgesehen ist.

Die Sperrklinkenanordnung 3 weist eine Sperrklinkenkinematik 5 und ein verstellbares Blockierelement 6 auf. Durch eine Kopplung zwischen der Falle 2 und der Sperrklinkenkinematik 5 bewirkt die Rückstellung der Falle 2 aus der in Fig. 2 dargestellten Hauptschließstellung heraus in Richtung der in Fig. 1 dargestellten Offenstellung eine entsprechende Verstellung der Sperrklinkenkinematik 5. Bei dem dargestellten Ausführungsbeispiel ist es so, daß die Falle 2 mit der Sperrklinkenkinematik 5 im wesentlichen bewegungsgekoppelt ist. Mit "im wesentlichen" ist hier gemeint, daß ein noch zu erläuternder Freilauf vorgesehen ist, der die Bewegungskopplung jedenfalls teilweise außer Kraft setzt.

Wenn sich die Sperrklinkenanordnung 3, wie in Fig. 2 dargestellt, in der Haltestellung befindet, so blockiert das Blockierelement 6 die obige, durch die Falle 2 bewirkbare Verstellung der Sperrklinkenkinematik 5 und damit die Rückstellung der Falle 2.

Die Sperrklinkenkinematik 5 weist den oben angesprochenen Freilauf auf, der im Zuge einer Verstellung der Falle 2 von der Hauptschließstellung (Fig. 2) in den Überhub (Fig. 3) durchlaufen wird. Beim Durchlaufen des Freilaufs ist die Falle 2 weitgehend entkoppelt von einem Teil der Sperrklinkenkinematik 5. Die konstruktive Umsetzung des Freilaufs wird weiter unten näher erläutert.

Bis hierhin entspricht die Beschreibung grundsätzlich noch dem in der DE 103 12 304 A1 offenbarten Kraftfahrzeugschloß. Der Inhalt der DE 103 12 304 A1 wird insoweit in vollem Umfange zum Gegenstand der vorliegenden Anmeldung gemacht.

Wesentlich ist nun, daß die Sperrklinkenkinematik 5 für die Realisierung des Freilaufs einen um eine Schwenkachse 7 schwenkbaren Freilaufhebel 8 aufweist.

Der Freilaufhebel 8 ist gegen einen Anschlag 9 vorgespannt. Dabei ist der Freilaufhebel 8 derart mit der Falle 2 gekoppelt, daß das Durchlaufen des Freilaufs mit einem Verschwenken des Freilaufhebels 8 gegen seine Vorspannung verbunden ist. Die mit einem derartigen Freilauf verbundenen Vorteile wurden im allgemeinen Teil der Beschreibung erläutert. Die obige Realisierung eines Freilaufs mit einem um eine Schwenkachse 7 schwenkbaren Freilaufhebel 8 läßt sich vorteilhaft auf alle denkbaren Ausgestaltungen einer Sperrklinkenkinematik 5 anwenden.

Bei dem in den Fig. 1 bis 3 dargestellten und insoweit bevorzugten Kraftfahrzeugschloß weist die Sperrklinkenkinematik 5 einen um eine Schwenkachse 10 schwenkbaren Übertragungshebel 11 auf, der derart mit der Falle 2 gekoppelt ist, daß durch das Verschwenken der Falle 2 aus der Hauptschließstellung heraus in Richtung der Offenstellung der Übertragungshebel 11 verstellbar ist. Bei in Haltestellung befindlicher Sperrklinkenanordnung 3 blockiert das Blockierelement 6 den Übertragungshebel 11 und damit die Falle 2.

Es ist den Fig. 1 bis 3 zu entnehmen, daß der Freilaufhebel 8 auf dem Übertragungshebel 11 angeordnet und um seine Schwenkachse 7 schwenkbar gelagert ist. Der Anschlag 9 ist dabei fest am Übertragungshebel 11 angeordnet.

Zur Kopplung des Übertragungshebels 11 mit der Falle 2 ist ein Zwischenhebel 12 zwischen diesen beiden Komponenten vorgesehen. Dabei ist der Zwischenhebel 12 an der Falle 2 einerseits und über den Freilaufhebel 8 am Übertragungshebel 11 andererseits schwenkbar und bezüglich der jeweiligen Schwenkachse 4, 10 exzentrisch angelenkt. Im einzelnen ist der Zwischenhebel 12 am Anlenkpunkt 13 an der Falle 2 und am Anlenkpunkt 14 am Freilaufhebel 8 angelenkt.

Bei gegenüber dem Übertragungshebel 11 feststehendem Freilaufhebel 8 bildet die oben beschriebene Kopplung zwischen Falle 2, Zwischenhebel 12 und Übertragungshebel 11 ein Viergelenkgetriebe, durch das sich die jeweils gewünschte Untersetzung der Sperrklinkenkinematik 5 mit geringem konstruktivem Auf wand einstellen läßt.

Bei in der Hauptschließstellung befindlicher Falle 2 bewirkt nun ein Drehmoment auf die Falle 2 in Öffnungsrichtung, in Fig. 2 rechtsherum, eine Rückstellkraft von der Falle 2 auf die Sperrklinkenkinematik 5. Diese Rückstellkraft wird als Druckkraft über den Zwischenhebel 12 auf den Freilaufhebel 8 und vom Freilaufhebel 8 über den Anschlag 9 einerseits und die Schwenkachse 7 des Freilaufhebels 8 andererseits auf den Übertragungshebel 11 geleitet. Die Kraftwirkungslinie 15 dieser Rückstellkraft ist in den Fig. 1 bis 3 dargestellt. Bei in der Hauptschließstellung befindlicher Falle 2 läuft die Kraftwirkungslinie 15 vergleichsweise nahe an der Schwenkachse 10 des Übertragungshebels 11 vorbei, so daß das resultierende, auf den Übertragungshebel 11 wirkende Drehmoment vergleichsweise gering ist. Dieses Drehmoment wird vom Blockierelement 6 aufgenommen, das mit einer am Übertragungshebel 11 angeordneten Hauptrast 16 in Eingriff steht. Entsprechend befindet sich die Sperrklinkenanordnung 3 in der Haltestellung.

Es wurde bereits darauf hingewiesen, daß die Falle 2, insbesondere beim Schließvorgang, in einen Überhub bringbar ist. Dies ist dann der Fall, wenn bei in der Hauptschließstellung befindlicher Falle 2 ein Drehmoment auf die Falle 2 in Schließrichtung, in Fig. 2 linksherum, wirkt. Dieses Drehmoment bewirkt eine Überhubkraft von der Falle 2 auf die Sperrklinkenkinematik 5, die als Zugkraft über den Zwischenhebel 12 auf den Freilaufhebel 8 wirkt und den Freilaufhebel 8 gegen seine Vorspannung aushebt. Den so ausgehobenen Freilaufhebel 8 zeigt Fig. 3.

Das oben beschriebene Ausheben des Freilaufhebels 8 ist nur dann möglich, wenn der Übertragungshebel 11 bei in der Hauptschließstellung befindlicher Falle 2 durch irgendeine konstruktive Maßnahme daran gehindert wird, der gesamten Überhubbewegung der Falle 2 zu folgen. Eine in den Zeichnungen 1 bis 3 dargestellte Maßnahme sieht einen feststehenden Anschlag 17 für eine entsprechende Blockierung des Übertragungshebels 11 vor. Alternativ oder zusätzlich kann es aber auch vorgesehen sein, daß der Übertragungshebel 11 in Fig. 2 rechtsherum derart vorgespannt ist, daß er durch die Überhubbewegung nicht mitgenommen wird.

Im Überhub erfolgt die Kraftübertragung zwischen dem Zwischenhebel 12 und dem Übertragungshebel 11 nicht über den Anschlag 9, sondern ausschließlich über den Freilaufhebel 8 bzw. über dessen seine Vorspannung verursachende Feder o. dgl..

Es wurde bereits darauf hingewiesen, daß der Blockierhebel 6 im Hinblick auf seine Funktion der Sperrklinke eines konventionellen Kraftfahrzeugschlosses entspricht. Entsprechend ist der Blockierhebel 6 vorzugsweise in seine Blockierstellung vorgespannt und fällt beim Schließvorgang in die Hauptrast 16 des Übertragungshebels 11 ein. Um beim Schließvorgang das sichere Einfallen des Blockierhebels 6 gewährleisten zu können, ist auch für den Zwischenhebel 11 ein gewisser Überhub vorzusehen. Es ist Fig. 3 zu entnehmen, daß zwischen dem Blockierhebel 6 und dem Übertragungshebel 11 ein Spalt 18 entstanden ist, der das Einfallen des Blockierhebels 6 erlaubt.

Der obige Spalt 18 ist dadurch entstanden, daß der Übertragungshebel 11 über einen geringen Schwenkbereich der Überhubbewegung der Falle 2 gefolgt ist. Dieser Überhub des Übertragungshebels 11 wird im dargestellten und insoweit bevorzugten Ausführungsbeispiel durch den Anschlag 17 begrenzt. Bei Fortsetzung der Überhubbewegung der Falle 2 wird, wie oben beschrieben, der Freilaufhebel 8 ausgelenkt.

Es läßt sich zusammenfassen, daß mit der oben beschriebenen Realisierung eines Freilaufs mittels eines schwenkbaren Freilaufhebels 8 mit einfachen konstruktiven Mitteln eine Entkopplung der Falle 2 vom Übertragungshebel 11 der Sperrklinkenkinematik 5 möglich ist.

Es wurde bereits erläutert, daß die Sperrklinkenkinematik 5 hier vorzugsweise ein Untersetzungsgetriebe ist und daß dadurch die vom Blockierelement 6 zur Blockierung der Falle 2 aufzubringende Blockierkraft entsprechend der Auslegung des Untersetzungsgetriebes reduziert ist.

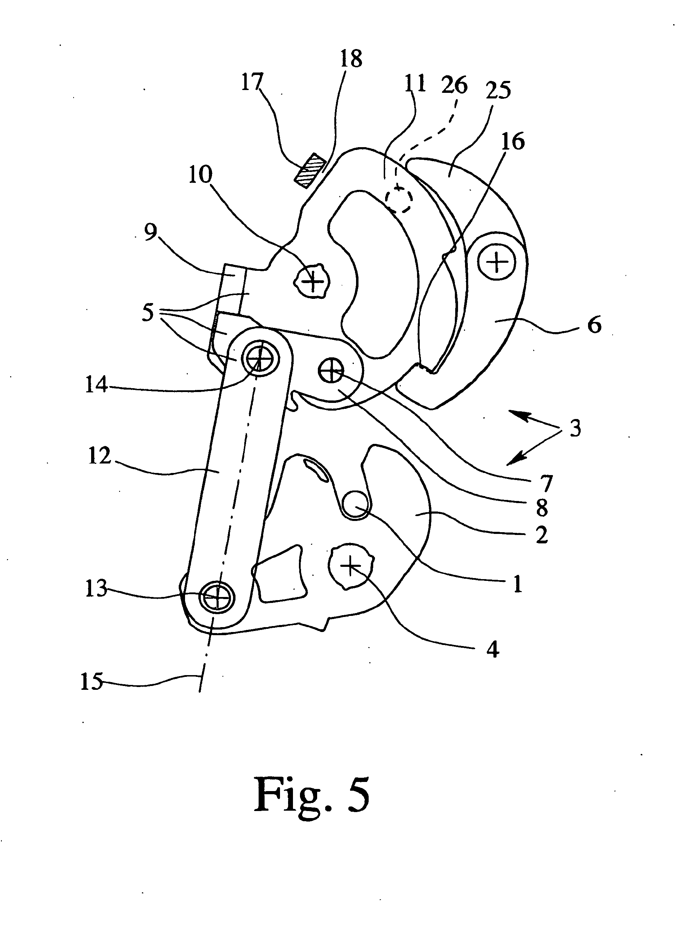

Bei dem in Fig. 5 dargestellten, bevorzugten Ausführungsbeispiel kommt der Ausgestaltung des Blockierelements 6 ganz besondere Bedeutung zu. Das Blokkierelement 6 ist hier zweiarmig ausgestaltet und weist an seinem zweiten Arm einen Abschnitt 25 auf, der mit einem korrespondierenden Abschnitt 26 am Übertragungshebel 11 in Eingriff bringbar ist. Die Anordnung ist dort so getroffen, daß beim Ausheben des Blockierelements 6 der Abschnitt 25 am Blockierelement 6 in Eingriff mit dem Abschnitt 26 am Übertragungshebel 11 kommt und die Verstellung der Falle 2 in Richtung der Offenstellung unterstützt. Damit läßt sich ein Verklemmen der Sperrklinkenanordnung 3 beim Ausheben des Blockierelements 6 weitgehend ausschließen.

Das in Fig. 5 dargestellte, zweiarmige Blockierelement 6 kann grundsätzlich einstückig ausgestaltet sein. Es ist aber auch eine mehrstückige Ausgestaltung denkbar. Dann ist es vorzugsweise so, daß die beiden Arme über eine Federanordnung miteinander gekoppelt sind. Bei dem in Fig. 5 dargestellten und insoweit bevorzugten Ausführungsbeispiel ist es so, daß der den Abschnitt 25 aufweisende Arm des Blockierelements 6 gegenüber dem anderen Arm in die Zeichenebene hinein versetzt angeordnet ist. Dadurch kann der Abschnitt 25 den Übertragungshebel 11 hintergreifen und in Eingriff mit dem hier bolzenformigen Abschnitt 26 am Übertragungselement 11 kommen. Hier sind auch andere Ausgestaltungen denkbar.

Nach einer weiteren Lehre, der eigenständige Bedeutung zukommt, wird eine Haltevorrichtung für eine Fahrzeugsicherheitseinrichtung 19 beansprucht. Es wurde bereits darauf hingewiesen, daß es sich bei der Fahrzeugsicherheitseinrichtung 19 beispielsweise um einen verlagerbaren Überrollbügel, eine verlagerbare Kopfstütze, ein verlagerbares Kniepolster, eine verlagerbare Motorhaube, einen verlagerbaren Stoßfänger, ein verlagerbares Lenkrad o. dgl. handeln kann. Diese beispielhafte Aufzählung ist vorliegend nicht beschränkend zu verstehen.

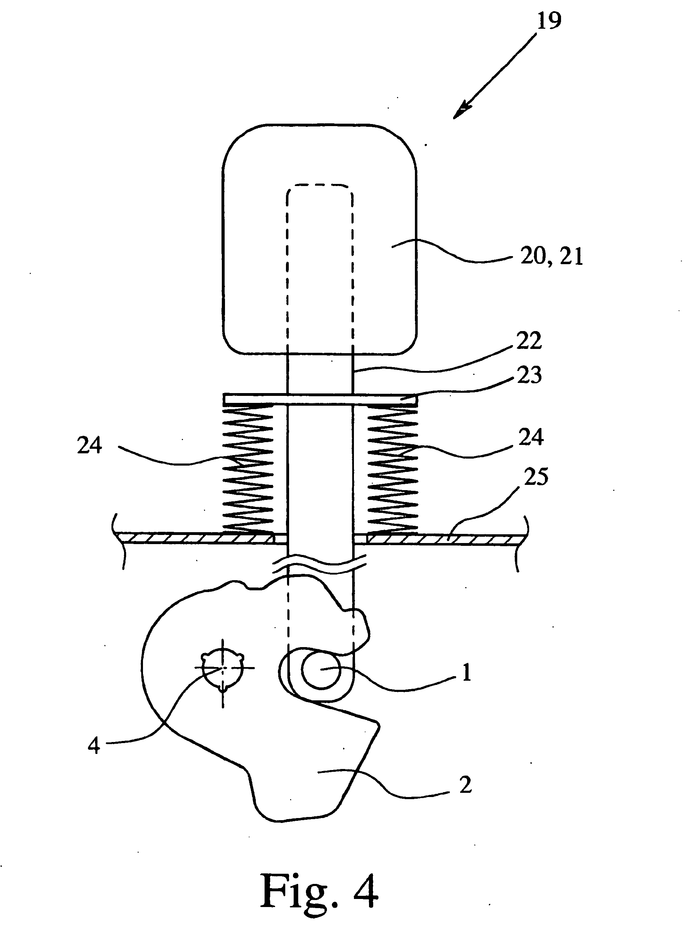

Fig. 4 zeigt als Beispiel einer Fahrzeugsicherheitseinrichtung 19 eine Kopfstütze 20 mit integriertem, gestrichelt angedeutetem Überrollbügel. Dieser bildet gleichzeitig ein aus einer Ruhestellung, gezeigt in Fig. 4, schlagartig in eine Wirkungsstellung zu verlagerndes Bauteil 21.

Das Bauteil 21 der Fahrzeugsicherheitseinrichtung 19 weist einen Träger 22 auf. An diesem Träger 22 befindet sich im dargestellten Ausführungsbeispiel ein Flansch 23, an dem von unten her Federpakete 24 zum schlagartigen Verlagern des Bauteils 21 in seine Wirkungsstellung, hier in seine ausgefahrene Stellung, angreifen. Diese Federpakete 24 sind in der Ruhestellung des Bauteils 21 eingespannt zwischen dem Flansch 23 und einem karosseriefesten Widerlager 25, das hier nur angedeutet ist. Das Bauteil 21 hält seine Ruhestellung ein, weil es in dieser Ruhestellung durch die Haltevorrichtung festgehalten wird. Dazu weist das Bauteil 21 ein Halteelement 1 auf, das in einem karosseriefesten Einlaufkanal in Ruhestellung des Bauteils 21 liegt und dort von einer Falle 2 der Haltevorrichtung festgehalten wird. Der Aufbau der Haltevorrichtung für eine Fahrzeugsicherheitseinrichtung 19 ist identisch zu dem oben beschriebenen Kraftfahrzeugschloß, soweit das Kraftfahrzeugschloß in den Fig. 1 bis 3 dargestellt ist. Insoweit gelten alle Ausführungen zu dem Kraftfahrzeugschloß für die Haltevorrichtung entsprechend.

Bei der beanspruchten Haltevorrichtung ist der oben beschriebene Freilauf insbesondere für den Fall vorzusehen, in dem die Haltevorrichtung von der Wirkungsstellung in die Ruhestellung überführt werden soll. Dies entspricht dem Schließvorgang bei dem oben beschriebenen Kraftfahrzeugschloß.

## Patentansprüche

1. Kraftfahrzeugschloß mit einer Falle (2) und einer Sperrklinkenanordnung (3), wobei die Falle (2) um eine Schwenkachse (4) in einer Schließrichtung und in einer Öffnungsrichtung verschwenkbar ist, wobei die Falle (2) in eine Offenstellung und in eine Hauptschließstellung sowie ggf. in eine Vorschließstellung bringbar ist, wobei die Falle (2) ferner in einen von der Offenstellung aus gesehen jenseits der Hauptschließstellung gelegenen Überhub bringbar ist, wobei die Sperrklinkenanordnung (3) in wenigstens eine Haltestellung und in eine Freigabestellung bringbar ist und wobei die in Haltestellung befindliche Sperrklinkenanordnung (3) die Falle (2) jedenfalls in der Hauptschließstellung hält, wobei die Sperrklinkenanordnung (3) eine Sperrklinkenkinematik (5) und ein verstellbares Blockierelement (6) aufweist, wobei durch die Rückstellung der Falle (2) aus der Hauptschließstellung heraus in Richtung der Offenstellung die Sperrklinkenkinematik (5) verstellt wird und wobei bei in Haltestellung befindlicher Sperrklinkenanordnung (3) das Blockierelement (6) die durch die Falle (2) bewirkbare Verstellung der Sperrklinkenkinematik (5) und damit die Rückstellung der Falle (2) blockiert und wobei die Sperrklinkenkinematik (5) oder die Kopplung zwischen der Falle (2) und der Sperrklinkenkinematik (5) einen Freilauf derart aufweist, daß im Zuge einer Verstellung der Falle (2) von der Hauptschließstellung in den Überhub der Freilauf durchlaufen wird und beim Durchlaufen des Freilaufs die Falle (2) weitgehend entkoppelt von zumindest einem Teil der Sperrklinkenkinematik (5) ist,
**dadurch gekennzeichnet,**
**daß** die Sperrklinkenkinematik (5) für die Realisierung des Freilaufs einen um eine Schwenkachse (7) schwenkbaren Freilaufhebel (8) aufweist, daß der Freilaufhebel (8) gegen einen Anschlag (9) vorgespannt ist und daß der Freilaufhebel (8) derart mit der Falle (2) gekoppelt ist, daß das Durchlaufen des Freilaufs mit einem Verschwenken des Freilaufhebels (8) gegen seine Vorspannung verbunden ist.

2. Kraftfahrzeugschloß nach Anspruch 1, **dadurch gekennzeichnet, daß** die Sperrklinkenkinematik (5) einen um eine Schwenkachse (10) schwenkbaren Übertragungshebel (11) aufweist, daß durch das Verschwenken der Falle (2) aus der Hauptschließstellung heraus in Richtung der Offenstellung der Übertragungshebel (11) verstellbar ist und daß bei in Haltestellung befindlicher Sperrklinkenanordnung (3) das Blockierelement (6) den Übertragungshebel (11) blokkiert.

3. Kraftfahrzeugschloß nach Anspruch 2, **dadurch gekennzeichnet, daß** der Freilaufhebel (8) auf dem Übertragungshebel (11) angeordnet und um seine Schwenkachse (7) schwenkbar gelagert ist, vorzugsweise, daß der Anschlag (9) fest am Übertragungshebel (11) angeordnet ist.

4. Kraftfahrzeugschloß nach Anspruch 2 oder 3, **dadurch gekennzeichnet, daß** ein Zwischenhebel (12) zwischen dem Übertragungshebel (11) und der Falle (2) angeordnet ist und daß der Zwischenhebel (12) an der Falle (2) einerseits und über den Freilaufhebel (8) am Übertragungshebel (11) andererseits schwenkbar und bezüglich der jeweiligen Schwenkachse (4, 10) exzentrisch angelenkt ist.

5. Kraftfahrzeugschloß nach Anspruch 4, **dadurch gekennzeichnet, daß** bei in der Hauptschließstellung befindlicher Falle (2) ein Drehmoment auf die Falle (2) in Öffnungsrichtung eine Rückstellkraft von der Falle (2) auf die Sperrklinkenkinematik (5) bewirkt, die über den Zwischenhebel (12) auf den Freilaufhebel (8) und vom Freilaufhebel (8) über den Anschlag (9) einerseits und die Schwenkachse (7) des Freilaufhebels (8) andererseits auf den Übertragungshebel (11) geleitet wird.

6. Kraftfahrzeugschloß nach Anspruch 4 oder 5, **dadurch gekennzeichnet, daß** bei in der Hauptschließstellung befindlicher Falle (2) ein Drehmoment auf die Falle (2) in Schließrichtung eine Überhubkraft von der Falle (2) auf die Sperrklinkenkinematik (5) bewirkt, die über den Zwischenhebel (12) auf den Freilaufhebel (8) wirkt und den Freilaufhebel (8) gegen seine Vorspannung aushebt, vorzugsweise, daß währenddessen der Übertragungshebel (11) im wesentlichen feststeht.

7. Kraftfahrzeugschloß nach einem der vorhergehenden Ansprüche, **dadurch gekennzeichnet, daß** die Sperrklinkenkinematik (5) ein Untersetzungsgetriebe ist und daß **dadurch** die vom Blockierelement (6) zur Blockierung der Falle (2) aufzubringende Blockierkraft entsprechend der Auslegung des Untersetzungsgetriebes reduziert ist.

8. Kraftfahrzeugschloß nach Anspruch 2 und ggf. nach einem der Ansprüche 3 bis 7, **dadurch gekennzeichnet, daß** die Anordnung so getroffen ist, daß beim Ausheben des Blockierelements (6) ein Abschnitt (25) am Blockierelement (6) in Eingriff mit einem Abschnitt (26) am Übertragungshebel (11) kommt und die Verstellung der Falle (2) in Richtung der Offenstellung unterstützt.

9. Haltevorrichtung für eine Fahrzeugsicherheitseinrichtung (19) mit einem aus einer Ruhestellung in eine Wirkungsstellung zu verlagernden Bauteil (21) mit einem Halteelement (1), mit einer das Bauteil (21) in der Ruhestellung festhaltenden und dazu am Halteelement (1) des Bauteils (21) angreifenden Falle (2) und mit einer Sperrklinkenanordnung (3), wobei die Falle (2) um eine Schwenkachse (4) in einer Schließrichtung und in einer Öffnungsrichtung verschwenkbar und **dadurch** einerseits in eine das Bauteil (21) haltende Hauptschließstellung und andererseits in eine das Halteelement (1) und damit das Bauteil (21) freigebende Offenstellung bringbar ist, wobei die Falle (2) ferner in einen von der Offenstellung aus gesehen jenseits der Hauptschließstellung gelegenen Überhub bringbar ist, wobei die Sperrklinkenanordnung (3) in wenigstens eine Haltestellung und in eine Freigabestellung bringbar ist und wobei die in Haltestellung befindliche Sperrklinkenanordnung (3) die Falle (2) jedenfalls in der Hauptschließstellung hält, wobei die Sperrklinkenanordnung (3) eine Sperrklinkenkinematik (5) und ein verstellbares Blockierelement (6) aufweist, wobei bei in Haltestellung befindlicher Sperrklinkenanordnung (3) das Blockierelement (6) eine Verstellung der Falle (2) aus der Hauptschließstellung in die Freigabestellung verhindert und wobei die Sperrklinkenkinematik (5) oder die Kopplung zwischen der Falle (2) und der Sperrklinkenkinematik (5) einen Freilauf derart aufweist, daß im Zuge einer Verstellung der Falle (2) von der Hauptschließstellung in den Überhub der Freilauf durchlaufen wird und beim Durchlaufen des Freilaufs die Falle (2) weitgehend entkoppelt von zumindest einem Teil der Sperrklinkenkinematik (5) ist,
**dadurch gekennzeichnet,**
**daß** durch die Rückstellung der Falle (2) aus der Hauptschließstellung heraus in Richtung der Offenstellung die Sperrklinkenkinematik (5) verstellt wird und daß bei in Haltestellung befindlicher Sperrklinkenanordnung (3) das Blockierelement (6) die durch die Falle (2) bewirkbare Verstellung der Sperrklinkenkinematik (5) und damit die Rückstellung der Falle (2) blockiert, daß die Sperrklinkenkinematik (5) für die Realisierung des Freilaufs einen um eine Schwenkachse (7) schwenkbaren Freilaufhebel (8) aufweist, daß der Freilaufhebel (8) gegen einen Anschlag (9) vorgespannt ist und daß der Freilaufhebel (8) derart mit der Falle (2) gekoppelt ist, daß das Durchlaufen des Freilaufs mit einem Verschwenken des Freilaufhebels (8) gegen seine Vorspannung verbunden ist.

10. Haltevorrichtung nach Anspruch 9, **gekennzeichnet durch** die Merkmale des kennzeichnenden Teils eines oder mehrerer der Ansprüche 1 bis 8.

## Claims

1. Motor vehicle lock having a latch (2) and a pawl arrangement (3), wherein the latch (2) can be pivoted about a pivot axis (4) in a locking direction and in an opening direction, wherein the latch (2) can be brought into an open position and into a main locking position and also, if appropriate, into a pre-locking position, wherein the latch (2) can also be brought into an overtravel position which is beyond the main locking position as seen from the open position, wherein the pawl arrangement (3) can be brought into at least one retaining position and into a release position and wherein when the pawl arrangement (3) is in the retaining position it retains the latch (2) in any case in the main locking position, wherein the pawl arrangement (3) has pawl kinematics (5) and an adjustable blocking element (6), wherein the resetting of the latch (2) out of the main locking position in the direction of the open position adjusts the pawl kinematics (5) and wherein, when the pawl arrangement (3) is in the retaining position, the blocking element (6) blocks adjustment of the pawl kinematics (5) using the latch (2) and thus also blocks resetting of the latch (2), and wherein the pawl kinematics (5) or the coupling between the latch (2) and the pawl kinematics (5) have/has a freewheel such that in the course of adjustment of the latch (2) from the main locking position into the overtravel the latch passes through the freewheel, and as it passes through the freewheel the latch (2) is largely decoupled from at least part of the pawl kinematics (5),
**characterized**
**in that** in order to realize the freewheel, the pawl kinematics (5) have a freewheel lever (8) that can be pivoted about a pivot axis (7), in that the freewheel lever (8) is prestressed against a stop (9) and in that the freewheel lever (8) is coupled to the latch (2) such that the passage through the freewheel is accompanied by the freewheel lever (8) pivoting counter to its prestress.

2. Motor vehicle lock according to Claim 1, **characterized in that** the pawl kinematics (5) have a transmission lever (11) that can be pivoted about a pivot axis (10), **in that** the transmission lever (11) can be adjusted by pivoting the latch (2) out of the main locking position in the direction of the open position and **in that** when the pawl arrangement (3) is in the retaining position, the blocking element (6) blocks the transmission lever (11).

3. Motor vehicle lock according to Claim 2, **characterized in that** the freewheel lever (8) is arranged on the transmission lever (11) and mounted such that it can pivot about its pivot axis (7), preferably **in that** the stop (9) is arranged securely on the transmission lever (11).

4. Motor vehicle lock according to Claim 2 or 3, **characterized in that** an intermediate lever (12) is arranged between the transmission lever (11) and the larch (2) and **in that** the intermediate lever (12) is articulate eccentrically with respect to the respective pivot axis (4, 10) and such that it can pivot on the latch (2) at one end and, via the freewheel lever (8), on the transmission lever (11) at the other end.

5. Motor vehicle lock according to Claim 4, **characterized in that** when the latch (2) is in the main locking position a torque on the latch (2) in the opening direction causes a resetting force for the latch (2) on the pawl kinematics (5), said force being directed to the freewheel lever (8) via the intermediate lever (12) and from the freewheel lever (8) to the transmission lever (11) via the stop (9) on one side and the pivot axis (7) of the freewheel lever (8) on the other side.

6. Motor vehicle lock according to Claim 4 or 5, **characterized in that** when the latch (2) is in the main locking position a torque on the latch (2) in the locking direction causes an overtravel force for the latch (2) on the pawl kinematics (5), said force acting on the freewheel lever (8) via the intermediate lever (12) and lifting out the freewheel lever (8) counter to its prestress, preferably **in that** in the meantime the transmission lever (11) is substantially fixed.

7. Motor vehicle lock according to one of the preceding claims, **characterized in that** the pawl kinematics (5) is a reduction gear and **in that** the blocking force to be applied by the blocking element (6) to block the latch (2) is reduced thereby in accordance with the design of the reduction gear.

8. Motor vehicle lock according to Claim 2 and if appropriate according to one of Claims 3 to 7, **characterized in that** the arrangement is such that when the blocking element (6) is lifted out, a section (25) of the blocking element (6) engages with a section (26) on the transmission lever (11) and supports the adjustment of the latch (2) in the direction of the open position.

9. Retaining apparatus for a vehicle security device (19), having a component (21) which is to be moved from a rest position into an active position and has a retaining element (1), having a latch (2) which fixes the component (21) in the rest position and for this purpose acts on the retaining element (1) of the component (21) and having a pawl arrangement (3), wherein the latch (2) can be pivoted about a pivot axis (4) in a locking direction and in an opening direction and can thus be brought on the one hand into a main locking position retaining the component (21) and on the other hand into an open position releasing the retaining element (1) and thus also the component (21), wherein the latch (2) can also be brought into an overtravel position which is beyond the main locking position as seen from the open position, wherein the pawl arrangement (3) can be brought into at least one retaining position and into a release position and wherein when the pawl arrangement (3) is in the retaining position it retains the latch (2) in any case in the main locking position, wherein the pawl arrangement (3) has pawl kinematics (5) and an adjustable blocking element (6), wherein when the pawl arrangement (3) is in the retaining position, the blocking element (6) prevents an adjustment of the latch (2) out of the main locking position into the release position and wherein the pawl kinematics (5) or the coupling between the latch (2) and the pawl kinematics (5) have/has a freewheel such that in the course of adjustment of the latch (2) from the main locking position into the overtravel the latch passes through the freewheel, and as it passes through the freewheel the latch (2) is largely decoupled from at least part of the pawl kinematics (5),
**characterized**
**in that** the pawl kinematics (5) are adjusted by the resetting of the latch (2) out of the main locking position in the direction of the open position and in that when the pawl arrangement (3) is in the retaining position, the blocking element (6) blocks adjustment of the pawl kinematics (5) using the latch (2) and thus also blocks resetting of the latch (2), in that in order to realize the freewheel, the pawl kinematics (5) have a freewheel lever (8) that can be pivoted about a pivot axis (7), in that the freewheel lever (8) is prestressed against a stop (9) and in that the freewheel lever (8) is coupled to the latch (2) such that the passage through the freewheel is accompanied by the freewheel lever (8) pivoting counter to its prestress.

10. Retaining apparatus according to Claim 9, **characterized by** the features of the characterizing part of one or more of Claims 1 to 8.

## Revendications

1. Serrure de véhicule automobile comprenant un pêne (2) et un agencement de cliquet d'arrêt (3), le pêne (2) pouvant pivoter autour d'un axe de pivotement (4) dans une position de fermeture et dans une position d'ouverture, le pêne (2) pouvant être amené dans une position d'ouverture et dans une position de fermeture principale ainsi qu'éventuellement dans une position de pré-fermeture, le pêne (2) pouvant en outre être amené dans une position de dépassement de course placée de chaque côté de la position de fermeture principale vu à partir de la position d'ouverture, l'agencement de cliquet d'arrêt (3) pouvant être amené dans au moins une position de retenue et dans une position de libération et l'agencement de cliquet d'arrêt (3) se trouvant dans la position de retenue retenant le pêne (2) à chaque fois dans la position de fermeture principale, l'agencement de cliquet d'arrêt (3) présentant une cinématique de cliquet d'arrêt (5) et un élément de blocage déplaçable (6), la cinématique du cliquet d'arrêt (5) étant déplacée par le retour du pêne (2) de la position de fermeture principale dans la direction de la position d'ouverture, et lorsque l'agencement de cliquet d'arrêt (3) se trouve dans la position de retenue, l'élément de blocage (6) bloquant le déplacement de la cinématique de cliquet d'arrêt (5) pouvant être provoqué par le pêne (2) et donc bloquant le retour du pêne (2), et la cinématique de cliquet d'arrêt (5) ou l'accouplement entre le pêne (2) et la cinématique de cliquet d'arrêt (5) présentant une roue libre de telle sorte qu'au cours d'un déplacement du pêne (2) de la position de fermeture principale dans la position de dépassement de course, il passe par la roue libre et lors du passage par la roue libre, le pêne (2) est essentiellement désaccouplé d'au moins une partie de la cinématique de cliquet d'arrêt (5),
**caractérisée en ce que**
la cinématique de cliquet d'arrêt (5) présente, pour la réalisation de la roue libre, un levier de roue libre (8) pouvant pivoter autour d'un axe de pivotement (7), **en ce que** le levier de roue libre (8) est précontraint contre une butée (9) et **en ce que** le levier de roue libre (8) est accouplé au pêne (2) de telle sorte que le passage par la roue libre soit associé à un pivotement du levier de roue libre (8) à l'encontre de sa précontrainte.

2. Serrure de véhicule automobile selon la revendication 1, **caractérisée en ce que** la cinématique de cliquet d'arrêt (5) présente un levier de transfert (11) pouvant pivoter autour d'un axe de pivotement (10), **en ce que** par le pivotement du pêne (2) hors de la position de fermeture principale dans la direction de la position d'ouverture, le levier de transfert (11) peut être déplacé et **en ce que** lorsque l'agencement de cliquet d'arrêt (3) est dans la position de retenue, l'élément de blocage (6) bloque le levier de transfert (11).

3. Serrure de véhicule automobile selon la revendication 2, **caractérisée en ce que** le levier de roue libre (8) est disposé sur le levier de transfert (11) et est monté de manière à pouvoir pivoter autour de son axe de pivotement (7), de préférence **en ce que** la butée (9) est disposée fixement sur le levier de transfert (11).

4. Serrure de véhicule automobile selon la revendication 2 ou 3, **caractérisée en ce qu'**un levier intermédiaire (12) est disposé entre le levier de transfert (11) et le pêne (2) et **en ce que** le levier intermédiaire (12) est articulé d'une part au pêne (2) et d'autre part par le biais du levier de roue libre (8) au levier de transfert (11), de manière pivotante et excentrée par rapport à l'axe de pivotement respectif (4, 10).

5. Serrure de véhicule automobile selon la revendication 4, **caractérisée en ce que** lorsque le pêne (2) se trouve dans la position de fermeture principale, un couple sur le pêne (2) dans la direction d'ouverture provoque une force de rappel du pêne (2) sur la cinématique de cliquet d'arrêt (5), qui est guidée sur le levier de transfert (11) par le biais du levier intermédiaire (12) sur le levier de roue libre (8) et du levier de roue libre (8) par le biais de la butée (9) d'une part et de l'axe de pivotement (7) du levier de roue libre (8) d'autre part.

6. Serrure de véhicule automobile selon la revendication 4 ou 5, **caractérisée en ce que** lorsque le pêne (2) se trouve dans la position de fermeture principale, un couple sur le pêne (2) dans la direction de fermeture exerce une force de dépassement de course du pêne (2) sur la cinématique de cliquet d'arrêt (5), qui agit par le biais du levier intermédiaire (12) sur le levier de roue libre (8) et soulève le levier de roue libre (8) à l'encontre de sa précontrainte, de préférence **en ce que** pendant ce temps, le levier de transfert (11) est essentiellement fixe.

7. Serrure de véhicule automobile selon l'une quelconque des revendications précédentes, **caractérisée en ce que** la cinématique de cliquet d'arrêt (5) est un réducteur et **en ce que** de ce fait la force de blocage à appliquer par l'élément de blocage (6) pour bloquer le pêne (2) est réduite en fonction de la conception du réducteur.

8. Serrure de véhicule automobile selon la revendication 2 et éventuellement selon l'une quelconque des revendications 3 à 7, **caractérisée en ce que** l'agencement est tel que lors du soulèvement de l'élément de blocage (6), une portion (25) sur l'élément de blocage (6) vient en prise avec une portion (26) sur le levier de transfert (11) et supporte le déplacement du pêne (2) dans la direction de la position d'ouverture.

9. Dispositif de retenue pour un dispositif de sécurité d'un véhicule (19) comprenant un composant (21) à déplacer d'une position de repos dans une position active, comprenant un élément de retenue (1), avec un pêne (2) fixant le composant (21) dans la position de repos et venant en prise à cet effet avec l'élément de retenue (1) du composant (21), et avec un agencement de cliquet d'arrêt (3), le pêne (2) pouvant pivoter autour d'un axe de pivotement (4) dans une direction de fermeture et dans une direction d'ouverture et de ce fait pouvant être amené d'une part dans une position de fermeture principale retenant le composant (21) et d'autre part dans une position d'ouverture libérant l'élément de retenue (1) et donc le composant (21), le pêne (2) pouvant en outre être amené dans une position de dépassement de course situé de chaque côté de la position de fermeture principale, vu depuis la position d'ouverture, l'agencement de cliquet d'arrêt (3) pouvant être amené dans au moins une position de retenue et dans une position de libération et l'agencement de cliquet d'arrêt (3) se trouvant dans la position de retenue retenant le pêne (2) à chaque fois dans la position de fermeture principale, l'agencement de cliquet d'arrêt (3) présentant une cinématique de cliquet d'arrêt (5) et un élément de blocage déplaçable (6), lorsque l'agencement de cliquet d'arrêt (3) se trouve dans la position de retenue, l'élément de blocage (6) empêchant un déplacement du pêne (2) hors de la position de fermeture principale dans la position de libération et la cinématique de cliquet d'arrêt (5) ou l'accouplement entre le pêne (2) et la cinématique de cliquet d'arrêt (5) présentant une roue libre de telle sorte qu'au cours d'un déplacement du pêne (2) de la position de fermeture principale dans la position de dépassement de course, il passe par la roue libre et que lors du passage par la roue libre, le pêne (2) soit essentiellement désaccouplé d'au moins une partie de la cinématique de cliquet d'arrêt (5),
**caractérisé en ce que**
par le rappel du pêne (2) hors de la position de fermeture principale dans la direction de la position d'ouverture, la cinématique de cliquet d'arrêt (5) est déplacée et **en ce que** lorsque l'agencement de cliquet d'arrêt (3) se trouve dans la position de retenue, l'élément de blocage (6) bloque ce déplacement de la cinématique de cliquet d'arrêt (5) pouvant être provoqué par le pêne (2) et bloque ainsi le rappel du pêne (2), **en ce que** la cinématique de cliquet d'arrêt (5) présente, pour la réalisation de la roue libre, un levier de roue libre (8) pouvant pivoter autour d'un axe de pivotement (7), **en ce que** le levier de roue libre (8) est précontraint contre une butée (9) et **en ce que** le levier de roue libre (8) est accouplé au pêne (2) de telle sorte que le passage par la roue libre soit associé à un pivotement du levier de roue libre (8) à l'encontre de sa précontrainte.

10. Dispositif de retenue selon la revendication 9, **caractérisé par** les caractéristiques de la partie caractérisante d'une ou plusieurs des revendications 1 à 8.
